# EUROPEAN PATENT SPECIFICATION

(11) **EP 2 373 841 B1**
(45) Date of publication and mention of the grant of the patent: **10.04.2013**
(21) Application number: 09752814.5
(22) Date of filing: 13.11.2009
(51) Int. Cl.: D06F 58/24, D06F 58/02, D06F 58/28

(54) **A LAUNDRY DRYER**
WÄSCHETROCKNER
SÈCHE-LINGE

(30) Priority: 28.11.2008 TR 200809159
(43) Date of publication of application: 12.10.2011
(73) Proprietor: Arçelik Anonim Sirketi, 34950 Istanbul (TR)
(72) Inventor: CAN, Yusuf, 34950 Istanbul (TR); SARIOGLU, Kemal, 34950 Istanbul (TR)
(86) International application number: PCT/EP2009/065095
(87) International publication number: WO 2010/060810

(56) References cited:
- EP-A1- 1 420 104
- EP-A1- 1 852 541
- GB-A- 184 745

## Description

The present invention relates to a laundry dryer comprising a condenser.

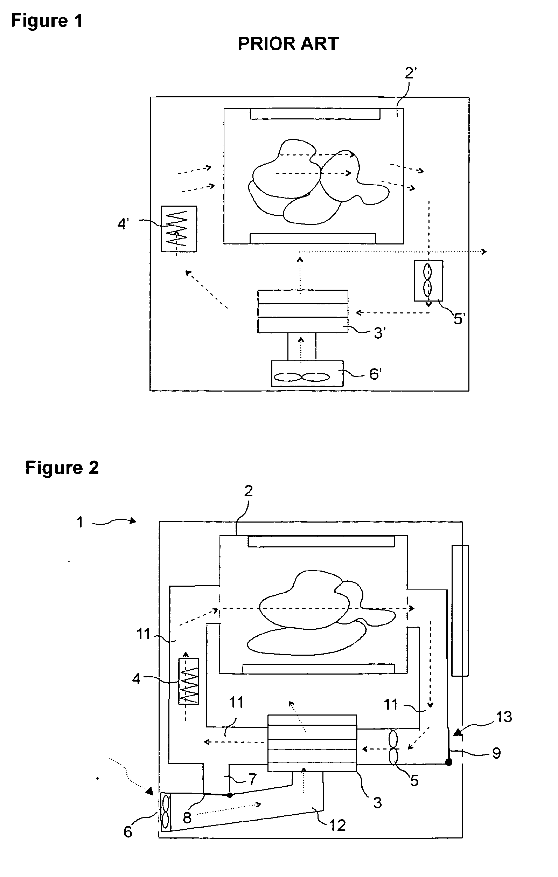

In closed cycle laundry dryers, the condensers of which are cooled with air, the drying process is provided with the interaction between the cooling air and the cycle air that do not directly contact each other. The cycle air is heated by a heater (4') and directed into the drum (2'), dehumidify the laundry by contacting the damp laundry and is transferred to a condenser (3') to be dehumidified. Meanwhile, the cooling air is sent onto the condenser (3') by means of a fan (6') and thus, the moisture in the cycle air is provided to be condensed by the condenser (3') being cooled. After the cycle air is dehumidified on the condenser (3', it is heated by the heater (4') and sent to the drum (2') by being put again into the drying cycle with low relative humidity rate and at high temperature. This stage during which laundry is dried is called the drying stage (Figure 1).

After the drying stage is completed, the heater (4') is deactivated and the airing stage wherein the laundry is cooled by sending low temperature air to the drum (2') begins. During the airing stage, there is almost no moisture in the cycle air exiting the drum (2') since the laundry is dry. However, during the drying stage, while the cycle air is passing through the condenser (3') wherein the moisture is collected, the cycle air is loaded with moisture therein and carries it to the drum (2'). This causes the remoistening of the laundry during the airing stage. Thus, the laundry is detected as humid and this results in the starting of the heaters (4') by the reactivation of the drying stage (Figure 1). This causes disadvantage in efficiency, time and cost. In dryers comprising condenser, various embodiments are developed in order to improve the condensing efficiency and operating performance.

Document EP-A-1852541 discloses a laundry dryer comprising a drum wherein the laundry to be dried is emplaced; a circulation channel for circulating the drying air; a condenser disposed in the circulation channel; a heater disposed in the circulation channel; a cycle fan disposed in the circulation channel, and a valve disposed in the circulation channel after the drum and before the condenser, for selectively connecting said circulation channel to the external environment.

In the state of the art Japanese Patent Documents JP4156897 and JP4232000, it is described that the heater is deactivated at the end of the drying stage and the cool air is sent to the laundry and accordingly effective drying process is provided.

In the state of the art Japanese Patent Document JP2000093698 a dryer comprising a condenser which is bypassed or activated according to the ambient moisture is described.

The aim of the present invention is the realization of a laundry dryer the energy consumption and processing time of which is decreased and which is utilized in laundry drying.

The laundry dryer utilized in the laundry drying process and realized in order to attain the aim of the present invention is explicated in the first claim and its other elements in the related claims.

The laundry dryer comprises a circulation channel, wherein the cycle air passes through during the drying stage and a heater, a drum wherein the laundry which will be dried is emplaced, a cycle fan which provides the air which exits the drum to proceed through the circulation channel, a condenser providing the dehumidification of the air which exits the cycle fan, all of which are disposed on the circulation channel respectively. The laundry dryer, furthermore, comprises a cooling fan which provides the transmission of cool air to the condenser for the condensing and dehumidification of the cycle air and a cooling channel which transmits the air absorbed by the cooling fan from the ambient to the condenser. The cooling channel and the circulation channel separate the cooling air and the cycle air which pass through therein.

The laundry dryer, furthermore, comprises an additional line providing the connection of the cooling air which exits the cooling fan to the circulation channel and a cooling valve which provides the transmission of the cooling air to the condenser by blocking the way between the cooling fan and the additional line during the drying state and which also provides the connection of the cooling air to the circulation channel by means of the additional line by closing the cooling channel during the airing stage.

The laundry dryer, furthermore, comprises a cycle valve which provides the cycle air exiting the drum during the drying stage to reach the condenser and which provides the cooling air exiting the drum during the airing stage to be released from an opening disposed on the circulation channel to the outside.

In an embodiment of the present invention, the laundry dryer comprises a condenser valve disposed, according to the direction of air flow, on the condenser exit, which provides the cycle air to proceed through the circulation channel during the drying stage and which prevents the cooling air from passing through the circulation channel during the airing stage.

By means of the present invention, the utilization of the cooling air taken from the ambient in the cooling of the condenser during the drying stage and in the drum during the airing stage is provided and advantage in drying time and energy consumption is provided with the deactivation of the condenser during the airing stage.

The model embodiments relating to a laundry dryer which is utilized during the drying process and which is realized in order to attain the aim of the present invention are illustrated in the attached figures, where:

Figure 1 - is the schematic view of a laundry dryer in the prior art.

Figure 2 - is the schematic view of the laundry dryer of the present invention in the drying stage.

Figure 3 - is the schematic view of the laundry dryer of the present invention in the airing stage.

Figure 4 - is the schematic view of another embodiment of the present invention.

The elements illustrated in the figures are numbered as follows:
1. Laundry dryer
2. Drum
3. Condenser
4. Heater
5. Cycle fan
6. Cooling fan
7. Additional line
8. Cooling valve
9. Cycle valve
10. Condenser valve
11. Circulation channel
12. Cooling channel
13. Opening

A laundry dryer (1) utilized in the drying process comprises
- a drum (2) wherein the laundry desired to be dried is emplaced,
- circulation channels (11) wherein the cycle air passes through
- a condenser (3) disposed in the circulation channel (11), providing the cycle air to be dehumidified by being condensed,
- a heater (4) disposed in the circulation channel (11), providing the dehumidified cycle air exiting the condenser (3) to be heated,
- at least one cycle fan (5) disposed in the circulation channel (11), providing the circulation of the cycle air,
- a cooling fan (6) providing the cooling air absorbed from the ambient to be blown onto the condenser (3) in order that the condenser (3) can be cooled and
- a cooling channel (12) which extends between the condenser (3) and the cooling fan (6) and wherein the cooling air passes through.

In the laundry dryer (1), the cycle air is sent to the drum (2) after being passed over the heater (6). The hot air dehumidifies the laundry in the drum (2) and exits the drum (2). The cycle fan (5) absorbs the air exiting the drum (2) and transmits it to the condenser (3). The cooling fan (6) which blows the cool air in the ambient to the condenser (3) provides that the moisture stays on the condenser (3) by cooling the humid and hot cycle air which passes through the condenser (3) and also provides that the cycle air exits the condenser in a dry state. While the cycle air proceeds through the circulation channel (11), the cooling air passes through the cooling channel (12) and these two air do not mix with each other. The cycle fan (5) completes the drying cycle by transmitting the dry cycle air exiting the condenser (3) to the heater (4) once again and then to the drum (2). The drying stage continues until the laundry is substantially dehumidified. In order to cool the laundry which is dry but hot after the drying stage, the cooling air in the ambient is sent to the drum (2) and the airing stage begins, thus the laundry is cooled.

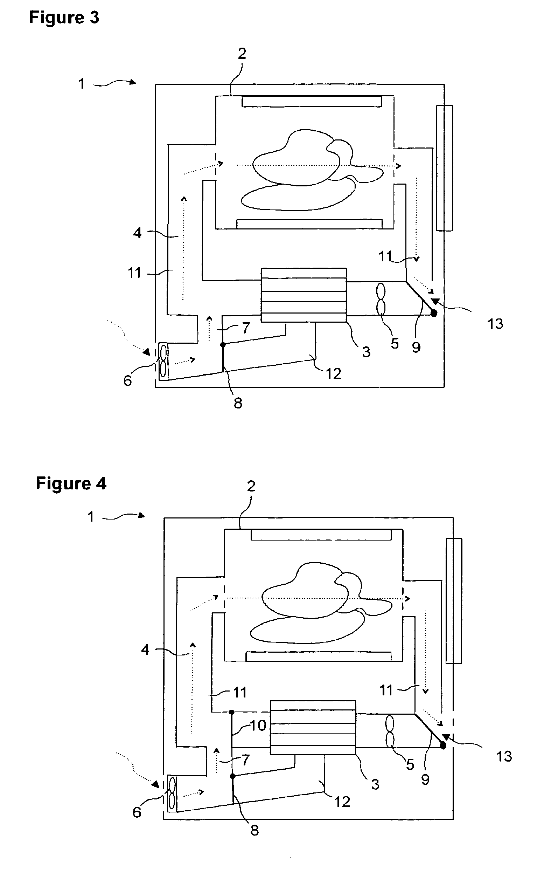

The laundry dryer (1), furthermore, comprises
- an additional line (7) one end of which opens to the cooling fan (6) and the other end of which opens to the circulation channel (11), the end of which opening to the circulation channel (11) is connected after the condenser (3) according to the direction of air flow
- a cooling valve (8) which provides the air blown by the cooling fan (6) to be directed to the condenser (3) during the drying stage and to be directed to the drum (2) by means of the additional line (7) during the airing stage
- an opening (13) disposed after the drum (2) and before the condenser (3) on the circulation channel (11) according to the direction of air flow and
- a cycle valve (9) disposed on the circulation channel (11), which covers the opening (13) during the drying stage and which uncovers the opening (13) and covers the condenser (3) entrance during the airing stage (Figures 2 and 3).

The cooling valve (8) blocks the way between the cooling fan (6) and the additional line (7) during the drying stage and directs the air blown by the cooling fan (6) to the condenser (3). During the airing stage, the cooling valve (8) blocks the way between the cooling fan (6) and the condenser (3) and transmits the air blown by the cooling fan (6) to the circulation channel (11) by directing it to the additional line (7) (Figures 3 and 4). The cycle valve (9) enables the passage of the cycle air through the circulation channel (11) by closing the opening (13) and the completion of the cycle during the drying stage and, during the airing stage, closes the condenser (3) entrance and transfers the cool air exiting the drum (2) to the outside from the opening (13) (Figures 2 and 3). Thus, the air absorbed from the outside is provided to be sent to the drum (2) by passing through the circulation channel (11) and without passing through the condenser (3), that is without receiving the moisture collected inside the condenser (3) during the drying stage and the laundry is prevented from being exposed to moisture again. Thus, the laundry is cooled in a short time after being dried and the reactivation of the drying stage is not required. At this moment, during the airing stage, the heater (4) disposed in the circulation channel (11) is deactivated.

In an embodiment of the present invention, the laundry dryer (1) comprises at least one condenser valve (10) disposed on the condenser (3) exit and on the circulation channel (11) according to the direction of air flow, which allows the cycle air to proceed by opening the circulation channel (11) during the drying stage and which closes the circulation channel (11) during the airing stage. The condenser valve (10) disconnects the condenser (3) from the circulation channel (11) during the airing stage, thus it is assured that the air blown by the cooling fan (6) proceeds through the circulation channel (11) without gravitating towards the condenser (3).

By means of the present invention, the air blown by the cooling fan (6) dehumidifies the cycle air by being directed to the condenser (3) during the drying stage by means of the cooling valve (8) and ventilates the laundry by being directed to the drum (2) during the airing stage. The air blown by the cooling fan (6) is evacuated from the opening (13) by means of the cycle valve (9) during the airing stage. Thus, the condenser (3) is deactivated during the airing stage and the moisture collected on the condenser (3) is prevented from being carried to the drum (2). As a result, the drying stage is realized with closed cycle, the airing stage with open cycle and an effective drying process is provided.

It is to be understood that the present invention is not limited to the embodiments disclosed above and an expert in the technique can easily introduce different embodiments. These should be considered within the scope of the protection postulated by the claims of the present invention.

## Claims

1. A laundry dryer (1) comprising a drum (2) wherein the laundry desired to be dried is emplaced,
- circulation channels (11) wherein the cycle air passes through
- a condenser (3) disposed in the circulation channel (11), providing the cycle air to be dehumidified by being condensed,
- a heater (4) disposed in the circulation channel (11), providing the dehumidified cycle air exiting the condenser (3) to be heated,
- a cycle fan (5) disposed in the circulation channel (11), providing the circulation of the cycle air,
- a cooling fan (6) providing the cooling air aspirated from the ambient to be blown onto the condenser (3) in order that the condenser (3) can be cooled and
- a cooling channel (12) which extends between the condenser (3) and the cooling fan (6) and wherein the cooling air passes through,
- **characterized by** an additional line (7) one end of which opens to the cooling fan (6) and the other end of which opens to the circulation channel (11), the end of which opening to the circulation channel (11) is connected after the condenser (3) according to the direction of air flow
- a cooling valve (8) which provides the cool air taken from the cooling fan (6) to dehumidify the cycle air by being directed to the condenser (3) during the drying stage and also provides the cool air taken from the cooling fan (6) to be sent to the drum (2) by opening into the additional line (7) during the airing stage
- an opening (13) disposed after the drum (2) and before the condenser (3) on the circulation channel (11) according to the direction of air flow and
- a cycle valve (9) disposed on the circulation channel (11), which covers the opening (13) during the drying stage and which uncovers the opening (13) during the airing stage.

2. A laundry dryer (1) as in Claim 1, **characterized by** at least one condenser valve (10) disposed on the condenser (3) exit and on the circulation channel (11) according to the direction of air flow, which allows the cycle air to proceed by opening the circulation channel (11) during the drying stage and which closes the circulation channel (11) during the airing stage.

## Patentansprüche

1. Wäschetrockner (1), umfassend eine Trommel (2), in die die zu trocknende Wäsche gelegt wird,
- Zirkulationskanäle (11), durch die die Zyklusluft strmöt,
- einen Verdichter (3), der im Zirkulationskanal (11) angeordnet ist und dafür sorgt, dass die Zyklusluft durch Verdichten entfeuchtet wird,
- eine Heizeinrichtung (4), die im Zirkulationskanal (11) angeordnet ist und dafür sorgt, dass die entfeuchtete Luft, die den Verdichter (3) verlässt, erwärmt wird,
- ein Zirkulationsgebläse (5), das im Zirkulationskanal (11) angeordnet ist und für die Zirkulation der Zyklusluft sorgt,
- ein Kühlgebläse (6), das dafür sorgt, dass die aus der Umgebung angesaugte Luft auf den Verdichter (3) geblasen wird, damit der Verdichter (3) gekühlt werden kann, und
- einen Kühlkanal (12), der sich zwischen dem Verdichter (3) und dem Kühlgebläse (6) erstreckt und durch den die Kühlluft strömt,
- **gekennzeichnet durch** eine weitere Leitung (7), deren eines Ende sich zum Kühlgebläse (6) hin öffnet und deren anderes Ende sich zum Zirkulationskanal (11) hin öffnet, wobei das Ende, das sich zum Zirkulationskanal (11) hin öffnet, bezüglich der Richtung des Luftstroms nach dem Verdichter (3) verbunden ist,
- ein Kühlventil (8), das dafür sorgt, dass die kühle Luft aus dem Kühlgebläse (6) die Zyklusluft entfeuchtet, indem diese während der Trocknungsphase zum Verdichter (3) geleitet wird, und außerdem dafür sorgt, dass die kühle Luft aus dem Kühlgebläse (6) während der Lüftungsphase zur Trommel (2) geleitet wird, indem sie sich in die weitere Leitung (7) öffnet,
- eine Öffnung (13), die bezüglich der Richtung des Luftstroms nach der Trommel (2) und vor dem Verdichter (3) am Zirkulationskanal (11) aneordnet ist, und
- ein Zyklusventil (9), das am Zirkulationskanal (11) angeordnet ist und die Öffnung (13) während der Trocknungsphase verschließt und die Öffnung (13) während der Lüftungsphase freigibt.

2. Wäschetrockner (1) nach Anspruch 1, **gekennzeichnet durch** wenigstens ein Verdichterventil (10), das bezüglich der Richtung des Luftstroms am Auslass des Verdichters (3) und am Zirkulationskanal (11) angeordnet ist und zulässt, dass die Zyklusluft weiter strömt, indem es den Zirkulationskanal (11) während der Trocknungsphase öffnet und den Zirkulationskanal (11) während der Lüftungsphase schließt.

## Revendications

1. Un sèche-linge (1) comprenant un tambour (2) dans lequel le linge à sécher est placé,
- des canaux de circulation (11) à travers lesquels l'air cycle passe
- un condenseur (3) disposé dans le canal de circulation (11) et permettant la déshumidification de l'air de cycle en étant condensé,
- un dispositif de chauffage (4) disposé dans le canal de circulation (11) et permettant le chauffage de l'air de cycle qui sort du condenseur (3),
- un ventilateur de cycle (5) disposé dans le canal de circulation (11) et permettant la circulation de l'air de cycle,
- un ventilateur de refroidissement (6) permettant à l'air de refroidissement aspiré de l'environnement d'être soufflé sur le condenseur (3) de telle sorte que le condenseur (3) peut être refroidi et
- un canal de refroidissement (12) qui s'étend entre le condenseur (3) et le ventilateur de refroidissement (6) et à travers lequel l'air de refroidissement passe,
- **caractérisé par** une ligne supplémentaire (7) dont l'une extrémité s'ouvre vers le ventilateur de refroidissement (6) et dont l'autre extrémité s'ouvre dans le canal de circulation (11) et dont l'extrémité s'ouvrant vers le canal de circulation (11) est relié après le condenseur (3) selon la direction de l'écoulement de l'air
- une soupape de refroidissement (8) qui permet à l'air frais pris du ventilateur de refroidissement (6) de déshumidifier l'air de cycle en étant dirigé vers le condenseur (3) au cours de l'étape de séchage et permet également à l'air frais pris du ventilateur de refroidissement (6) d'être envoyé au tambour (2) en s'ouvrant dans la ligne supplémentaire (7) au cours de l'étape d'aération
- une ouverture (13) formée après le tambour (2) et avant le condenseur (3) sur le canal de circulation (11) selon la direction de l'écoulement de l'air et
- une soupape de cycle (9) disposée sur le canal de circulation (11), qui ferme l'ouverture (13) au cours de l'étape de séchage et qui ouvre l'ouverture (13) au cours de l'étape d'aération.

2. Un sèche-linge (1) selon la Revendication 1, **caractérisé par** au moins une soupape du condenseur (10) qui est disposée sur la sortie du condenseur (3) et sur le canal de circulation (11) selon la direction de l'écoulement de l'air, qui permet à l'air de cycle de s'avancer en ouvrant le canal de circulation (11) au cours de l'étape de séchage et qui ferme le canal de circulation (11) au cours de l'étape d'aération.
